# EUROPEAN PATENT APPLICATION

(11) **EP 3 336 793 A1**
(43) Date of publication of application: **20.06.2018**
(21) Application number: 17206578.1
(22) Date of filing: 12.12.2017
(51) Int. Cl.: G06Q 40/00

(54) **SYSTEM AND METHOD FOR PROCESSING TRANSACTIONS**

(30) Priority: 14.12.2016 FI 20165966
(71) Applicant: Innovator Network, 33100 Tampere (FI)
(72) Inventor: Tolvanen, Jarkko, 33500 Tampere (FI); Tolvanen, Juhani, 33900 Tampere (FI)
(74) Representative: Espatent Oy

(57) **Abstract**

A system and method for processing transactions, comprising a user apparatus (20) comprising a user interface element (10) comprising a first app (10a) installed in the user apparatus (20); a second app installed in the user apparatus (20); and a back-end element (50); wherein the user interface element (10) is configured using the first app (10a) to select a target via the second app (10b), to retrieve target information and to send the target information to the back-end element (50); the back-end element (50) is configured to estimate, based on the target information, a set of values for a transaction relating to the target and to send the set of values to the user apparatus (20); and wherein the user interface element (10) after receiving the set of values from the back-end element (50) is configured approve or disapprove the set of values by a user gesture in the first app (10a).

## Description

### TECHNICAL FIELD

The present application generally relates to a system for processing transactions. In particular, but not exclusively, the present application relates to processing financial transactions and related data.

### BACKGROUND

This section illustrates useful background information without admission of any technique described herein being representative of the state of the art.

An increasing trend in all areas of society is the use and delivery of less paper copies of data, for example of receipts of business transactions, or work orders or the like. At the same time, an increasing amount of people use a personal electronic device equipped with a sophisticated user interface, imaging capabilities and communications.

Accordingly, there are systems in which a paper copy of transaction data, for example a receipt, is imaged with a personal electronic device, such as a smartphone, and sent to a server with further data for example as an expense report. Typically, the user of such a system types the further data using the personal electronic device and the imaged data of the transaction is used as an attachment only for example for accounting purposes.

Systems using the data of the transaction, for example a scanned receipt for retrieving the necessary information, are also known. Examples of such systems are shown in publications US20160328803A1, US20160071221A1, US20140279303A1 and US20140258838A1. However, such systems mostly require the user to type information, which may be cumbersome when using a handheld device for example while traveling.

It is the aim of the current invention to provide a method and system for processing transactions that mitigates the problems of the existing technologies.

### SUMMARY

Various aspects of examples of the invention are set out in the claims.

According to a first example aspect of the present invention, there is provided a system for processing transactions, comprising
a user apparatus comprising a user interface element comprising a first app installed in the user apparatus;
a second app installed in the user apparatus; and
a back-end element; wherein
the user interface element is configured using the first app to select a target via the second app, to retrieve target information and to send the target information to the back-end element;
the back-end element is configured to estimate, based on the target information, a set of values for a transaction relating to the target and to send the set of values to the user apparatus; and wherein
the user interface element after receiving the set of values from the back-end element is configured approve or disapprove the set of values by a user gesture in the first app.

The second app may comprise a calendar app and the target may comprise a calendar entry.

The target information may comprise information selected from a group of geographical location, time, date, duration and data relating to a user.

The set of values may comprise values selected from the group of project number, amount of expenses, type of expenses and amount of compensation for the user.

Retrieving target information may comprise retrieving a data file relating to the transaction and sending the data file to the back end element.

The user apparatus may comprise a camera element and retrieving the data file may comprise imaging a paper document.

The back-end element may comprise a cloud-based service.

The user gesture may comprise a swipe gesture.

According to a second example aspect of the present invention, there is provided a method for processing transactions, comprising
initiating a user interface element comprising a first app installed in a user apparatus;
selecting a target via a second app installed in the user apparatus;
retrieving target information and sending the target information to a back-end element;
estimating at the back-end element, based on the target information, a set of values for a transaction relating to the target;
sending the set of values to the user apparatus; and
after receiving the set of values at the user apparatus approving or disapproving the set of values with the user interface element by a user gesture in the first app.

The second app may comprise a calendar app and the target may comprise a calendar entry.

The target information may comprise information selected from a group of geographical location, time, date, duration and data relating to a user.

The set of values may comprise values selected from the group of project number, amount of expenses, type of expenses and amount of compensation for the user.

Retrieving target information may comprises retrieving a data file relating to the transaction and sending the data file to the back end element.

The user apparatus may comprise a camera element and retrieving the data file may comprise imaging a paper document.

The back-end element may comprise a cloud based service.

According to a third example aspect of the present invention, there is provided a computer program comprising computer-executable program code that, when executed, causes the computer to execute a method according to the second example aspect.

According to a fourth example aspect of the present invention, there is provided a non-transitory memory medium comprising the computer program of the third example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic principle view of a system according to an example embodiment of the invention; and
Fig. 2 shows a flow chart of a method of according to an example embodiment of the invention.

### DETAILED DESCRIPTON OF THE DRAWINGS

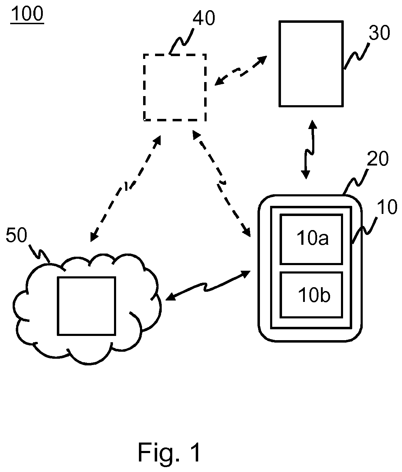

An example embodiment of the present invention and its potential advantages are understood by referring to Figs. 1 through 2 of the drawings. In this document, like reference signs denote like parts or steps.

Fig. 1 shows a schematic principle view of a system according to an example embodiment of the invention. Fig. 1 shows a system 100 for processing transactions. In an embodiment, a transaction comprises a financial transaction, such as an expense report from an employee to the employer, or a purchase report to accounting. The system 100 comprises a user interface element 10 in a user apparatus 20, and a back-end element 50. Fig. 1 further shows a third party element 40 and a data file 30, such as an electronic or paper file relating to the transaction.

The user interface element 10 comprises, in an embodiment, a first application, or app, 10a installed in the user apparatus 20 and executed by a processor of the user apparatus 20. The user apparatus 20 comprises in an embodiment a portable electronic device such as a smartphone, a mobile phone, a smartwatch, a PDA, a tablet computer or a laptop computer. The user apparatus further comprises, in an embodiment, a second application, or app, 10b installed in the user apparatus 20 and executed by the processor of the user apparatus 20. The user apparatus 20 comprises common elements and functionalities known to a skilled person, such as a communication interface, a processor, a memory, an input/output (I/O) unit a user interface (U/I) unit, such as a touch sensitive display. The user apparatus 20 comprises functionality, for example integrated with the touch sensitive display, that allows the user interface element 10 comprising the first app 10a to recognize and respond to user gestures, such as swipe gestures. The user apparatus 20 comprises, in an embodiment, a camera element configured to image a target to be imaged. In an embodiment, the camera element is configured to image a paper version of a data file and to form an electronic copy thereof.

The apparatus 20 is, and hence the applications executed by the processor thereof are, configured to communicate over one or more local links and/or to implement telecommunication links suited for establishing links with other users or for data transfer, e.g. using the Internet. For connecting to the internet, the apparatus is configured to establish a connection for example using a cellular or mobile operator network, such as a 3G, GPRS, EDGE, CDMA, WCDMA or LTE network. For such a connection, a mobile internet access is set up with the mobile operator. Further telecommunication links are in an embodiment links using any of: wireless local area network links, Bluetooth, ultra-wideband, cellular or satellite communication links.

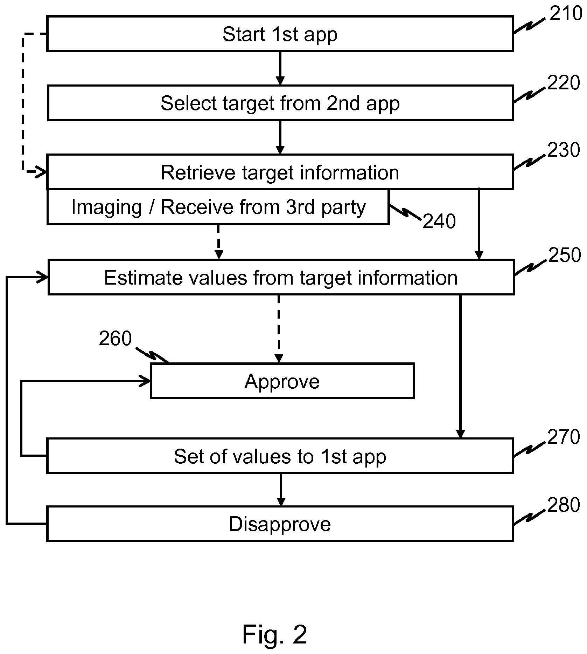

The back-end element 50 comprises, in an example embodiment, a cloud based service configured to administrate and control the system 100 as hereinafter described with reference to Fig. 2. The back-end element 50 comprises common elements and functionalities known to a skilled person, such as necessary processor and memory elements for carrying out the defined tasks. In an embodiment, the back-end element 50 comprises for example the means and functionalities configured to maintain a database of users, process information received from the user interface element 10 and the third party element 40 and to communicate with the elements of the system using communication means as hereinbefore described.

In an example embodiment the back-end element 50 is a cloud-based service accessible via the Internet. In a further example embodiment, the back-end element 50 comprises a server located near the user, for example at the place of employment of the user and accessible via internet. A skilled person appreciates that the back-end element 50 is, in an example embodiment shared with, i.e. configured to administrate and control, a plurality of systems 100 and hence provide services for a plurality of user apparatuses 20.

The third party element 40 comprises, in an embodiment, a server, a further user apparatus, or a further apparatus such as a payment system of a third party service provider. In an embodiment, the third party element is configured to communicate with the user apparatus 20 and/or the back-end element 50 for example in order to send information, such as an electronic data file 30 to the user apparatus 20 and/or the back-end element 50.

Fig. 2 shows a flow chart of a method of according to an embodiment of the invention. It is to be noted that the steps of the method carried out by the user interface element 10 in the user apparatus 20, the third party element 40 or the back-end element 50 are configured to be caused to be carried out by a processor of the respective element.

At step 210 the system is initiated. In an embodiment, the user of the system, typically a user who needs to prepare a transaction, such as an expense reimbursement request, launches the user interface element 10, i.e. the first application 10a, in her personal device, such as a smartphone. In a further embodiment, the first app 10a is automatically launched if a data file 30 relating to a transaction is received or imaged. In a still further embodiment, the first app 10a is automatically launched after a target from a second application is recognized, for example when a time for a calendar entry relating to a meeting is passed.

At step 220, a target for the transaction is selected. First, the first app 10a retrieves information from the second app 10b being executed or information the second app 10b has stored in the memory of the user apparatus 20. In a further embodiment, the second app 10b has stored the information at the back-end element 50 from where the first app 10a retrieves the information. The information retrieved at 220 comprises possible targets of the transaction and the first app 10a is configured to present these for the user, and the user of the first app 10a selects a target for example by a user gesture such as swiping on a touch sensitive display of the user apparatus 20. In a further embodiment, the target is selected automatically, for example if there is only a single possible target. In an embodiment, the second app 10b is a calendar application and the possible targets comprise calendar entries. In a further embodiment, the second app 10b is a project management app or the like, and the target comprises a project or an event in a project.

At step 230, target information is retrieved from the selected target and the target information is sent to the back-end element 50. In an embodiment, the retrieval of target information is carried out at the user apparatus 20 by the first app 10a. In a further embodiment, the retrieval of target information is carried out at the back-end element 50 instead or in addition to the first app 10a. In an embodiment, the target information is for example selected from a group of geographical location, time, date, duration and data relating to the user. In an embodiment, target information comprises information pertinent to processing the transaction, for example an expense reimbursement request, such as distance of travel the user has travelled. In an embodiment, the target information is automatically retrieved via the information of the second app 10b. In a further embodiment, the user is before sending the target information to the back-end element 50 shown a preview of the retrieved information for approval by a user gesture. In a still further embodiment, if no target is selected form the second app 10b, for example if there are no possible targets, the target information is still retrieved after step 210 at steps 230 and/or 240.

In an embodiment, at step 240, a data file 30 relating to the transaction is attached to the target information and sent to the back end element 50. In an embodiment, the first app 10a uses a camera element of the user apparatus 20 to image a paper file relating to the transaction. In a further embodiment, the user apparatus 20 and/or the back-end element 50 receives a data file relating to the transaction from the user apparatus 20 and/or a third party element 40.

At step 250 a set of values for the transaction are estimated at the back-end element 50 from the target information. In an embodiment, the set of values comprises values such as a project number, amount of expenses, type of expenses, and amount of compensation or reimbursement for the user. The set of values is in an embodiment directly obtainable or estimated from the target information, for example reimbursement for travel is easily estimated or calculated from the distance traveled. In an embodiment, the set of values is estimated from the electronic data file 30 received at 240, for example using optical character recognition on an image imaged with the camera element of the user apparatus 20.

At step 260, in case in which the user has previewed and approved the target information, and there is no further information in a data file 30 for example, or no data file attached, and the calculation is straightforward from the target information to the set of values, the transaction is approved at 260 and further actions can be carried out subsequently, such as accounting actions or forming of invoices.

At step 270, after the set of values has been estimated, the back-end element 50 sends the set of values to the first application 10a for approval or disapproval of the user. The user interface element 10 is configured to allow the user via the first app 10a to approve or disapprove the set of values, for example with user gestures on a touch sensitive display of the user apparatus 20. In an embodiment, the user gesture comprises a swipe gesture, depending on the direction of which the set of values is either approved or disapproved in a "tinder-like" manner. It is to be noted that the user need not at any point of the process type any information or values with the user interface element 10, but instead only approval or disapproval for the estimates is required with user gestures that can be carried out also in situations in which typing is inconvenient or impossible. In an embodiment, each value of the set of values is approved or disapproved separately.

If the user disapproves the estimated set of values at step 280, i.e. disapproves at least one value of the set of values, a new set of values, or at least a new value for the disapproved value, is estimated at 250. For example, if the back-end has estimated that the type of expense is promotional expense, and the type actually is personnel expense, a next best estimate is estimated at 250 and sent again to the first app 10a for approval or disapproval. Accordingly, a false estimate will be corrected eventually without any need for typing in corrections.

If the user approves the set of values, the transaction is approved at 260 and further actions can be carried out subsequently, such as accounting actions or forming of invoices.

Without in any way limiting the scope, interpretation, or application of the claims appearing below, a technical effect of one or more of the example embodiments disclosed herein is an easy to use processing of transactions. Another technical effect of one or more of the example embodiments disclosed herein is a convenient user experience. Another technical effect of one or more of the example embodiments disclosed herein is the provision of a system enabling processing of transactions without typing.

Embodiments of the present invention may be implemented in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, with examples of a suited apparatus being described and depicted hereinbefore. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A system for processing transactions, comprising
a user apparatus (20) comprising a user interface element (10) comprising a first app (10a) installed in the user apparatus (20);
a second app installed in the user apparatus (20); and
a back-end element (50); wherein
the user interface element (10) is configured using the first app (10a) to select a target via the second app (10b), to retrieve target information and to send the target information to the back-end element (50);
the back-end element (50) is configured to estimate, based on the target information, a set of values for a transaction relating to the target and to send the set of values to the user apparatus (20); and wherein
the user interface element (10) after receiving the set of values from the back-end element (50) is configured to approve or disapprove the set of values by a user gesture in the first app (10a).

2. The system of claim 1, wherein the second app (10b) comprises a calendar app and the target comprises a calendar entry.

3. The system of claim 1 or 2, wherein the target information comprises information selected from a group of geographical location, time, date, duration and data relating to a user.

4. The system of any preceding claim, wherein the set of values comprises values selected from the group of project number, amount of expenses, type of expenses and amount of compensation for the user.

5. The system of any preceding claim, wherein retrieving target information comprises retrieving a data file (30) relating to the transaction and sending the data file (30) to the back end element (50).

6. The system of claim 5, wherein the user apparatus (20) comprises a camera element and retrieving the data file (30) comprises imaging a paper document.

7. The system of any preceding claim, wherein the back-end element (50) comprises a cloud-based service.

8. The system of any preceding claim, wherein the user gesture comprises a swipe gesture.

9. A method for processing transactions, comprising
initiating a user interface element (10) comprising a first app (20a) installed in a user apparatus (20);
selecting a target via a second app (10b) installed in the user apparatus (20);
retrieving target information and sending the target information to a back-end element (50);
estimating at the back-end element (50), based on the target information, a set of values for a transaction relating to the target;
sending the set of values to the user apparatus; and
after receiving the set of values at the user apparatus (20) approving or disapproving the set of values with the user interface element (10) by a user gesture in the first app (10a).

10. The method of claim 9, wherein the second app (10b) comprises a calendar app and the target comprises a calendar entry.

11. The method of claim 9 or 10, wherein the target information comprises information selected from a group of geographical location, time, date, duration and data relating to a user.

12. The method of any of the claims 9-11, wherein the set of values comprises values selected from the group of project number, amount of expenses, type of expenses and amount of compensation for the user.

13. The method of any of the claims 9-12, wherein retrieving target information comprises retrieving a data file (30) relating to the transaction and sending the data file (30) to the back end element (50).

14. The method of claim 13, wherein the user apparatus (20) comprises a camera element and retrieving the data file (30) comprises imaging a paper document.

15. The method of any of the claims 9-14, wherein the back-end element (50) comprises a cloud based service.

16. A computer program comprising computer-executable program code that, when executed, causes the computer to execute a method according to any of the claims 9-15.

17. A non-transitory memory medium comprising the computer program of claim 16.
